# EUROPEAN PATENT SPECIFICATION

(11) **EP 0 996 542 B1**
(45) Date of publication and mention of the grant of the patent: **08.12.2004**
(21) Application number: 98934097.1
(22) Date of filing: 13.07.1998
(51) Int. Cl.: B32B 27/06, B32B 33/00, A61M 25/00, B65B 55/18

(54) **BARRIER MATERIAL**
SPERRMATERIAL
MATIERE BARRIERE

(30) Priority: 18.07.1997 SE 9702748
(43) Date of publication of application: 03.05.2000
(73) Proprietor: Astra Tech AB, 431 21 Mölndal (SE)
(72) Inventor: PETTERSSON, Agneta, S-431 21 Mölndal (SE); UTAS, Jan, S-431 21 Mölndal (SE)
(74) Representative: Lindberg, Klas Valter Bo
(86) International application number: PCT/SE1998/001383
(87) International publication number: WO 1999/003677

(56) References cited:
- EP-A- 0 550 039
- WO-A-97/26937
- US-A- 3 442 686
- US-A- 3 967 728
- FILE WPI, Derwent Accession No. 93-148519, OIKE KOGYO KK., "Package for Transfusing Liq. Vessel-Includes Filled Vessel and Film Package Prepd. by Laminating Unstretched Polypropylene Inner Layer and PET Outer Layer"; & JP,A,05 084 276 (06-04-93) DW9318.

## Description

### Field of the Invention

The present invention relates to a barrier material to ethylene oxide gas.

### Background of the Invention

The use of ethylene oxide gas as a sterilising medium for medical articles is well known. A case in point is the use of ethylene oxide for sterilising catheters such as urethral catheters. This is typically achieved after the catheter has been housed in a container, for instance a transparent urine collection bag in the case of a urethral catheter, the bag being adapted for the urethral catheter to project therethrough into the urethra of a patient with urine drained from the bladder by the catheter being collected in the urine collection bag. The urine collection bag presents a pathway for the access of ethylene oxide into it for sterilising the catheter and the inner surface of the bag. This pathway is typically an inlet to the bag through which the catheter is placed into the bag.

Many urethral catheters are provided with a surface coating which exhibits a reduced friction when wetted, thus facilitating insertion of the catheter into the urethra. Nonlimiting examples of such hydrophilic coatings are given in Applicant's European patent Nos. 0093093 and 0217771. It is therefore useful to include in the urine collection bag a fluid container which contains a wetting fluid for wetting of the catheter prior to use thereof. A typical wetting fluid is water or saline. It is preferable that the fluid container contain pre-sterilised water or saline and that the container be constructed from a barrier material to ethylene oxide gas as well as to the fluid contained in the container. This is because aqueous fluids can react with ethylene oxide gas to form 2-chloroethanol and ethylene glycol and trap unreacted ethylene oxide. This is not desirable as these toxic substances would be transferred to the urethra by the catheter after wetting thereof with the "contaminated" wetting fluid.

In WO-A1-9726937 (Astra AB) aluminium foil and polyvinylidene chloride (PVDC) are advocated for the manufacture of the fluid container. These materials, though, suffer from drawbacks for this application. In addition to the barrier requirements, the fluid container should be formed from an environmentally friendly material to ease the disposal thereof. The container also needs to be formed from a material which is relatively inert to ethylene oxide gas otherwise 2-chloroethanol can be formed in the material of the container which is not desirable firstly because this will give rise to problems of handling of the container by virtue of the toxicity of this substance and secondly because the 2-chloroethanol may diffuse over time into the wetting fluid. Furthermore, the material of the container should not trap ethylene oxide gas since this may also diffuse over time into the wetting fluid to either form 2-chloroethanol or become trapped in the wetting fluid. The hitherto proposed materials for the fluid container do not adequately satisfy one or more of these criteria.

The provision of a silicon oxide (SiOₓ) barrier layer in a laminate structure for yielding low oxygen and water permeability is known. For example, in JP-A-5084276 (Oike Ind. Co. Ltd) there is disclosed a storage package for an infusion agent formed from a laminate having an inner layer consisting of unstretched polypropylene (PP), an outer layer consisting of polyethylene terephthalate (PET) and an intermediate layer consisting of polyethylene terephthalate on which a silicon oxide film has been vapour deposited. In EP-A2-0550039 (Toyo Boseki KK) there is disclosed a laminate having low oxygen permeability which includes an intermediate barrier layer in which a silicon oxide is deposited on a film of *inter alia* polyethylene (PE), polypropylene, polyethylene terephthalate, nylon or polyvinyl alcohol (PVA). In one example, a crisp packet is formed from a laminate comprising inner and outer layers of polypropylene with a 12 micron thick barrier layer of a silicon oxide/ polyethylene terephthalate composite sandwiched therebetween. US-A-3442686 (Du Pont) discloses an oxygen and water impermeable transparent flexible packaging laminate having a polyester or polypropylene base sheet, a heal-sealable top sheet of polyethylene or a polyamide and an intermediate barrier sheet comprising a silicon oxide layer of thickness in the range 0.02-2.0µm. The silicon oxide layer is either formed on the surface of the base sheet or is formed on the surface of a polymeric substrate formed, for example, from polyethylene terephthalate.

There is no disclosure in the art, though, of the effectiveness of such silicon oxide-containing laminates as barriers to ethylene oxide gas. Moreover, there is no disclosure of such laminates being relatively inert to ethylene oxide gas such that the formation of 2-chloroethanol is kept to an acceptable level or of such laminates not trapping ethylene oxide gas.

It has surprisingly been found by the Applicants that a laminate having an inner layer which contains a polyolefin, an outer layer which contains a polyester, a polyolefin or a polyamide and an intermediate layer which contains a silicon oxide has a low permeability to ethylene oxide gas and is relatively unreactive with ethylene oxide gas. Such a laminate is referred to in the following Section as a "laminate of the type defined".

### Summary of the Invention

According to the invention there is provided the use of a laminate of the type defined in the manufacture of a barrier material to ethylene oxide gas.

The inner layer can allow a heat sealed container to be formed from the laminate which is impermeable or substantially impermeable to ethylene oxide gas by acting as a welding layer. Such a container may be formed by superimposing a first sheet of the laminate over a second sheet of the laminate such that the inner layers of the sheets are adjacent one another and then heat sealing along the superimposed edges of the first and second sheets.

The outer layer acts as a reinforcement or strengthener for the laminate while the intermediate layer provides the laminate with its principle barrier properties to ethylene oxide gas.

The polyolefin for the inner or outer layer may be a polypropylene or a polyethylene, including low-, high- and ultra high density polyethylene. If the laminate of the type defined is to be made into a sealed container which will be subjected to a high temperature then a high temperature polyolefin should be used for the inner layer to retain the integrity of the container. Polypropylene would be appropriate for the inner layer if the container were to be subjected to steam sterilisation for sterilising the contents of the container where temperatures of up to 120°C could be reached.

The polyester for the outer layer of the laminate may be polyethylene terephthalate. If a polyamide is used instead then nylon may be used.

The silicon oxide-containing intermediate layer may be a layer of silicon oxide deposited in-between the facing surfaces of the inner and outer layers. This may be achieved by depositing silicon oxide on one or other of the facing surfaces of the inner and outer layers in a manner known per se. Alternately, the intermediate layer may be a composite layer comprising the silicon oxide and a polymeric matrix or substrate therefor, for example a matrix or substrate of a polyester such as polyethylene terephthalate, a polyamide such as nylon, a polypropylene or a polyvinyl alcohol. One such composite material is that sold by the Mitsubishi Chemical Corporation of Tokyo, Japan under the trade name Techbarrier-T in which silicon oxide is deposited on the surface of a polyethylene terephthalate or polyvinyl alcohol substrate to give the substrate a metallised surface of silicon oxide. If need be there may be used a plurality of intermediate silicon oxide composite layers in the laminate.

The silicon oxide in the laminate may be silicon dioxide (SiO₂), a non-stoichiometric silicon oxide (e.g. SiO) or a mixture of such silicon oxides.

In a preferred embodiment of the invention the laminate of the type defined has an inner layer of polypropylene, an outer layer of polyethylene terephthalate and an intermediate composite layer of a silicon oxide with polyethylene terephthalate or polyvinyl alcohol.

According to the invention there is also provided a container which has been exposed to ethylene oxide gas and which is formed from a laminate of the type defined.

The present invention further provides an assembly which has been exposed to ethylene oxide gas comprising an article sterilised by the ethylene oxide gas and a sealed container formed from a laminate of the type defined.

The assembly may be a medical assembly with the article being a medical instrument for use in a medical procedure and the container containing an article or substance which is to be applied to the instrument as part of the medical procedure. The instrument may be for use in an invasive medical procedure, for example a catheter for insertion into a body cavity. One such catheter is a urethral catheter which is for insertion into the urethra of a patient for *inter alia* drug delivery, use in treating prostate cancer or draining of a patient's bladder. To facilitate insertion of a urethral catheter it is known to provide the catheter with a hydrophilic outer surface coating, such coatings having a reduced friction when wetted. With this in mind, the article of the assembly could be a hydrophilic outer surface coated urethral catheter and the container a wetting fluid container which contains a sterile wetting fluid for wetting of the hydrophilic coating of the catheter prior to use. The wetting fluid would typically be an aqueous liquid, for instance saline or water.

Use of the laminate of the type defined to form a wetting fluid container for use with a hydrophilic urethral catheter ensures that little or no ethylene oxide gas or reaction products are transferred by the catheter to a patient's urethra after wetting of the catheter with the wetting fluid in the wetting fluid container. The effectiveness of the laminate of the type defined as a liquid and vapour barrier also ensures that the catheter is not prematurely wetted by the wetting fluid in the container. The wetting fluid container can also be made transparent which is advantageous since catheters may be for self-administration by a patient and the confidence of these patients in using the assembly would be increased if the wetting fluid container were transparent so that they could see the contents thereof. The wetting fluid container would also be relatively easy to dispose of.

In an embodiment of the invention such as those hereinafter to be described the sealed container is an inner container and the assembly further comprises an outer container having an inner volume accessed by the ethylene oxide gas in which the inner container and article are disposed. Where the article is a hydrophilic coated urethral catheter and the inner container is a wetting fluid container for the catheter, the outer container may be a urine collection bag. For access of the ethylene oxide gas to the inner volume of the outer container, the outer container may have an opening such as an inlet through which the article and inner container are placed in the inner volume and/or the outer container may be formed from a material which is permeable to ethylene oxide gas particularly if the outer container is a sealed enclosure.

The assembly may be a sealed storage package with the outer container being the packaging in which the article and inner container are kept until they are required to be used. In this case, the outer container would typically be made from a material which is permeable to ethylene oxide gas thereby allowing for access of the ethylene oxide gas to the inner volume. Alternately, the assembly may itself be contained in a storage package. In this case, the assembly will be exposed to the ethylene oxide gas and then put in the storage package.

According to the invention there is yet further provided a storage package which contains a medical instrument having a hydrophilic outer surface coating and a sealed container constructed from a laminate of the type defined which contains a sterile wetting fluid for wetting of the hydrophilic coating of the instrument. Where the medical instrument is a urethral catheter for bladder drainage the storage package may further contain a urine collection bag.

According to the invention there is furthermore provided a process for forming a storage package containing a medical instrument having a hydrophilic outer surface coating and a wetting fluid container which contains a wetting fluid for wetting of the hydrophilic outer surface coating of the medical instrument comprising the steps of forming the wetting fluid container from a laminate of the type defined, subjecting the container to a steam or gamma radiation sterilising process to sterilise the wetting fluid in the container, assembling the medical instrument and sterilised wetting fluid container together into an assembly, subjecting the assembly to an ethylene oxide gas sterilising process to sterilise the medical instrument and enclosing the sterilised assembly in a storage package container.

### Brief Description of the Drawings

By way of example embodiments of the invention will now be described with reference to the accompanying Figures of drawings in which:-
Fig. 1 shows a first assembly comprising a urine collection bag, a hydrophilic urethral drainage catheter and a wetting fluid container integrated therewith;
Fig. 2 shows a second assembly comprising a urine collection bag, a hydrophilic urethral drainage catheter and an unopened wetting fluid sachet integrated therewith in an operational position in the inlet of the urine collection bag;
Fig. 3 is an exploded view of the unopened sachet of the assembly shown in Fig. 2 in the operational position in the inlet of the urine collection bag;
Fig. 4 is a front view of the unopened sachet of the assembly shown in Fig. 2 in an extended configuration prior to insertion thereof into the inlet of the urine collection bag to the operational position;
Fig. 5 is a side view of the unopened sachet shown in Fig. 4;
Fig. 6 is a perspective view of the unopened sachet of the assembly shown in Fig. 2 in a retracted configuration ready for insertion into the inlet of the urine collection bag to the operational position;
Fig. 7 corresponds to Fig. 2 but with the wetting fluid sachet having been opened; and
Fig. 8 corresponds to Fig. 3 but with the wetting fluid sachet having been opened.

### Description of Exemplary Embodiments of the Invention

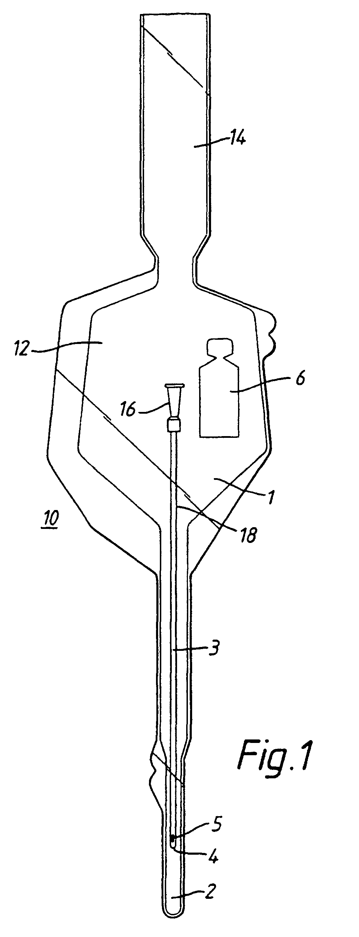

Referring first to Fig. 1, there is shown a first assembly 10 comprising a urine collection bag 1 of a transparent flexible plastics material. The bag 1 presents at the forward end thereof an elongate pocket 2 of depth sufficient to receive at least the insertable length of a hydrophilic urethral drainage catheter 3. The urine collection bag 1 further defines to the rear of the pocket 2 a urine collection chamber 12 which is in fluid communication with the pocket 2. Further rearwardly is an inlet 14 to the urine collection bag 1 through which the hydrophilic urethral catheter 3 is able to be positioned into the bag 1.

As can be seen, the catheter 3 comprises a flared rearward portion 16 and an elongate shaft 18 which extends forwardly from the rearward portion 16 and terminates in a rounded tip 4 at the forward end thereof. The catheter 3 is provided with a lumen (not shown) which extends from an open end in the rearward portion 16 to a drainage aperture 5 in the tip 4. The elongate shaft 18 of the catheter 3 has a hydrophilic outer surface coating of, for example, polyvinyl pyrrolidone (PVP).

A container in the form of a sachet 6 is secured to the inner surface of the urine collection bag 1. The sachet 6 contains sterile water or saline or other fluid suitable for wetting the hydrophilic coating of the urethral catheter 3 and is piercable or otherwise openable, for example by applying a hand pressure, so as to release substantially all of the water or saline contained therein into the pocket 2 immediately prior to use of the catheter 3. The wetting fluid can be sterilised by steam sterilising the sachet 6 or alternately by irradiating the sachet 6 with gamma radiation.

The assembly 10 needs to be exposed to an ethylene oxide sterilising process to sterilise the inner surfaces of the urine collection bag 1 and the catheter 3 prior to use. Since the sachet 6 contains sterile water or saline there is no need for sterilising the contents of the sachet 6. Moreover, ethylene oxide can become trapped in aqueous liquids and also react with aqueous liquids to form 2-chloroethanol. If such toxic substances were formed in the water or saline in the sachet 6 they would be transferred to the catheter 3 on wetting thereof and then on to the urethra on use of the catheter 3. Accordingly, the material of the sachet 6 needs to have a low permeability not only to water and moisture but also to ethylene oxide, preferably so that there is less than 3ppm of ethylene oxide in the sterilised water or saline. Furthermore, the sachet 6 also needs to be formed from a material which does not trap ethylene oxide or react therewith to form appreciable levels of 2-chloroethanol in the sachet material otherwise these toxic substances would give rise to problems of handling the sachet 6 and/or could diffuse into the water or saline prior to opening of the sachet 6.

In accordance with the invention, the sachet 6 is constructed from a laminate comprising an outer facing layer of polyethylene terephthalate, an inner layer of polypropylene and an intermediate layer made from the silicon oxide containing material Techbarrier-T marketed by the Mitsubishi Chemical Corporation of Tokyo, Japan. As will be shown hereinafter, such a construction gives the sachet 6 a low permeability to water/water vapour and ethylene oxide gas thereby alleviating the problem of contamination of the water or saline as well as only resulting in nominal residual levels of 2-chloroethanol and unreacted ethylene oxide in the sachet material after exposure to ethylene oxide gas. Also, the construction of the sachet 6 makes it relatively easy to dispose of after use.

After the assembly 10 has been exposed to ethylene oxide gas to sterilise the catheter 3, inner surface of the bag 1 and outer surface of the sachet 6 the assembly is stored in a sealed storage package to keep the assembly sterile until such time as the assembly is required to be used.

In use, the inlet 14 is sealed, for example by tying a knot in the material defining the inlet 14 or by clamping the inlet 14 with a clamp. The sachet 6 is then opened, for example by applying a pressure thereto through the material of the bag 1, to release the wetting fluid into the pocket 2 and the sterilised catheter 3 then left to soak for a predetermined duration in the wetting fluid to wet the hydrophilic outer surface thereof. Alternately, the bag 1 may be provided with a closed end in place of the inlet with the catheter 3 and sachet 6 prepackaged inside the bag 1. An inlet 14 is preferred, though, as this provides an easy pathway for access of the ethylene oxide to the inside of the bag 1. Otherwise, the bag 1 would need to be made permeable to ethylene oxide gas for the sterilisation of the catheter 3, inner surface of the bag 1 and outer surface of the sachet 6.

After wetting of the catheter 3 for the predetermined duration, the bag 1 is turned upside down and the forwardmost portion of the pocket 2 torn off. The elongate shaft 18 of the catheter 3 is then manoeuvred through the opening in the forward end of the pocket 2 and into the urethra of the patient until the flared rearward portion 16 forms a mechanical seal connection with the opening. Urine in the bladder of the patient is transported rearwardly through the lumen of the catheter 3 into the urine collection chamber 12. The catheter 3 is manoeuvred back inside the bounds of the bag 1 and the open end of the pocket 2 closed off for example by tying a knot with the material defining the pocket 2 or clamping the pocket 2 with a clamp. An opening can then be made in the urine collection chamber 12 for the collected urine to be poured away after which the bag 1 and contents can be disposed of.

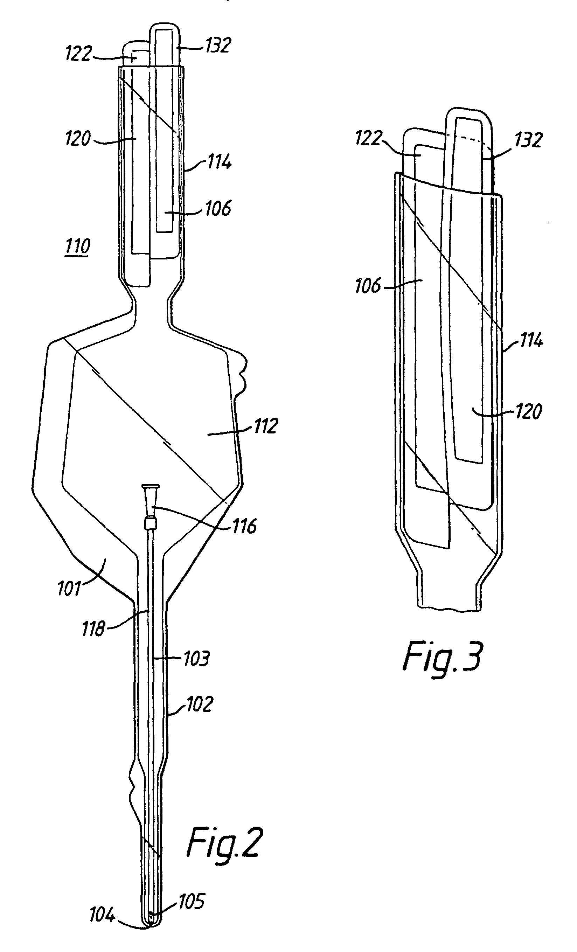

Turning now to Figs 2 to 8 of the drawings, there is shown a second assembly 110 which corresponds closely to the first assembly 10 described above with reference to Fig. 1 and like numerals are thus used to indicate like parts.

The difference between the second assembly 110 and the first assembly 10 is the design of the sterile wetting fluid containing sachet 106, the sachet 106 being of the same construction as the sachet 6 in the first assembly 10.

As can be seen particularly by reference to Figs 2 and 3, the sachet 106 is held in the inlet 114 of the urine collection bag 101 in an operational position by a friction fit. The sachet 106 has a forward portion 120 which in the operational position of the sachet 106 projects forwardly into the inlet 114 and a rearward portion 122 which in the operational position projects rearwardly out of the inlet 114. The fit of the sachet 106 in the inlet 114 is not so tight, though, as to prevent ethylene oxide from entering and exiting the inside of the bag 101 and sterilising the inner surface of the bag 101 and outer surfaces of the sachet 106 and catheter 103. The sterile wetting fluid is retained in the sachet 106 by peripheral sealing of the sachet 106 as shown.

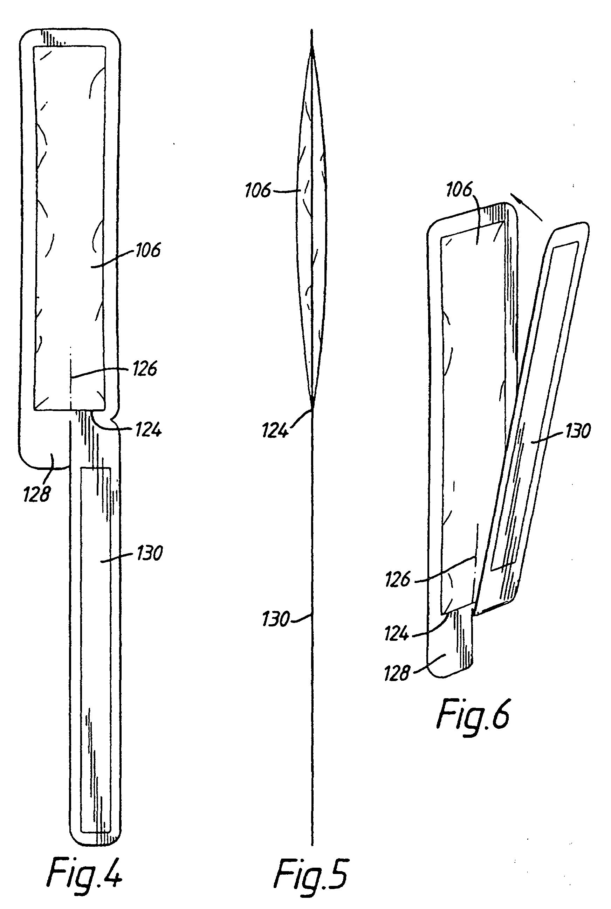

Referring now to Figs 4 and 5, the forward portion 120 of the sachet 106 presents a forward edge 124. Extending rearwardly from the forward edge 124 is a tear line 126. Projecting forwardly from the forward edge 124 of the sachet 106 to one side of the tear line 126 is a first tab 128. On the other side of the tear line 126 there is provided an elongate second tab 130 shown here in an extended position in which the second tab 130 projects forwardly from the forward edge 124.

As shown in Fig. 6, the elongate second tab 130 is movable about the forward edge 124 back on its self from the extended position shown in Figs 4 and 5 to a retracted position in which the second tab 130 extends rearwardly from the forward edge 124. When the second tab 130 is in the retracted position the sachet 106 is inserted into the inlet 114 to the operational position shown in Figs 2 and 3.

Returning now to Figs 2 and 3, it can be seen that the dimensions of the second tab 130 are such that when the sachet 106 is in the operational position a pulling portion 132 of the second tab 130 projects rearwardly from the inlet 114 of the urine collection bag 101 and forms a part of the rearward portion 122 of the sachet 106.

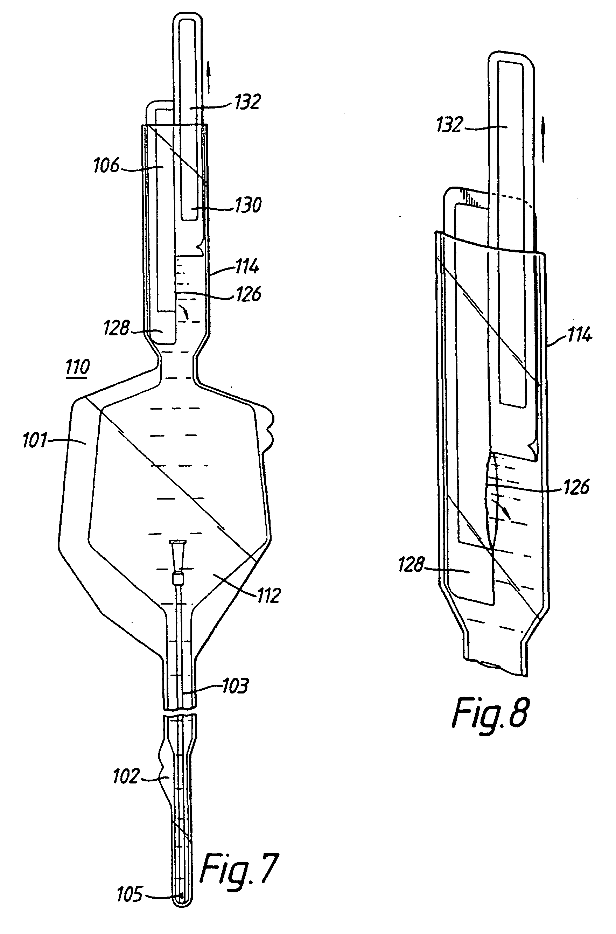

In Figs 7 and 8 there is shown the operation of the sachet 106 to release the contents of the sachet 106 into the pocket 102 to wet the hydrophilic outer coating of the catheter 103. The user grips the first tab 128 through the flexible transparent plastics material of the bag 101 and then pulls rearwardly on the pulling portion 132 of the second tab 130 which projects from the inlet 114 to cause the tear line 126 to be torn and the wetting fluid to be released into the pocket 102 to wet the catheter 103.

After release of the wetting fluid into the pocket 102 the sachet 106 is removed from the bag 101 and disposed of. The bag 101 and catheter 103 are then utilised in the manner hereinabove described for the assembly 10 shown in Fig. 1.

If need be, the bag 101 can be a closed bag with the sachet 106 and catheter 103 prepackaged within the bag 101. In this instance, the construction of the bag 101 is such that the bag is permeable to ethylene oxide gas and that the sachet 106 can be opened in the aforementioned manner through the material of the bag 101.

The sachet 106 has the advantage over the sachet 6 of Fig. 1 that it can better withstand the cyclical pressures which are typically exerted during the sterilising and packaging process as a consequence of the sachet 106 not having to be opened through application of a direct pressure thereto through the material of the bag 101 in which case a significantly weakened sachet edge would be required as a high pressure could not be applied through the bag 101 without damaging it.

The effectiveness of the laminate construction used for the sachets 6, 106 in the first and second assemblies 10, 110 hereinabove described with reference to Fig. 1 and Figs 2 to 8 will be apparent from Table I in which the barrier properties of the laminate of the sachets 6, 106 are compared with the corresponding properties of sachets formed from selected other materials well-known for use in food packaging.

As can be seen, the moisture and oxygen permeability of the laminate of the sachets 6, 106 and the selected other materials are compared in columns 1 and 2 of the Table, these being the important properties for food packaging. This data is based on the information supplied by the manufacturers of the materials, the names of which are listed underneath Table I. Columns 3 to 6 of Table I indicate the residual amounts of ethylene oxide and 2-chloroethanol in the sachet materials and water contained in the sachets after exposure of the sachets to an ethylene oxide gas sterilising process. The residual amounts were determined by gas chromatography at various time periods post-sterilisation.

As can be seen from Table I, the two aluminium-containing laminates have low oxygen, moisture and ethylene oxide permeability. They further produce low residual amounts of 2-chloroethanol in both the laminate and water direct after the ethylene oxide sterilisation. The drawback of these laminates, though, is that they are not easy to dispose of due to the inclusion of aluminium, and they have a high residual amount of ethylene oxide in the laminate direct after sterilisation. This high residual amount of ethylene oxide gas would be expected to slowly diffuse into the water and raise the residual amount of ethylene oxide or 2-chloroethanol in the water prior to use of the sachet. If, on the other hand, the ethylene oxide remained trapped in the sachet material or reacted with the laminate to increase the residual amount of 2-chloroethanol therein this would complicate handling of the sachet.

Table I shows that while polypropylene is a good moisture barrier it does not have a low permeability to gases such as oxygen and, more importantly, ethylene oxide.

The ethylene vinyl alcohol-containing laminate tested has a low permeability to oxygen but not to ethylene oxide gas or moisture. The gas permeability results for this material shows that a material which is effective as an oxygen barrier is not necessarily effective as a barrier to ethylene oxide gas.

Table I shows that a polyvinylidene chloride barrier has a low permeability to moisture, oxygen and ethylene oxide gas. Furthermore, only low residuals of 2-chloroethanol are found in the water contained in the sachet formed from this material 5 days after sterilisation. A large residual of 2-chloroethanol, however, is detected in the barrier 5 days after sterilisation. This material is also difficult to dispose of.

The aluminium oxide-containing laminate tested *prima facie* has the advantage over the aluminium-containing laminates that it is more environmentally friendly and thus easier to dispose of due to the lower amount of aluminium contained therein. As shown in column 4 of Table I, though, the aluminium oxide-containing laminate is not as effective a barrier to ethylene oxide as the aluminium-containing laminates, or for that matter the polyvinylidene chloride barrier. As importantly, there are relatively high residuals of 2-chloroethanol in the laminate and ethylene oxide in the laminate and the water 5 days after sterilisation.

Table I shows that the silicon oxide-containing laminate from which the sachets 6, 106 are constructed has a low permeability to moisture and ethylene oxide and only gives rise to nominal residuals of 2-chloroethanol and ethylene oxide in the material and the water 5 days post-sterilisation.

Table I clearly shows that the silicon oxide-containing laminate has markedly superior properties than any of the other tested materials for use in the formation of the sachets 6, 106. Moreover, the silicon oxide-containing laminate is relatively easy to dispose off, especially when compared with the aluminium-containing laminates and the polyvinylidene chloride barrier material.

It will be appreciated by those versed in the art that the invention is not restricted to the specific silicon oxide-containing laminate of the exemplary embodiments but encompasses other silicon oxide-containing laminates falling within the scope of the appended claims.

**TABLE I**

| | *Diffusion through the material* | | *Residuals in packaging material and in packed water* | | | |
|---|---|---|---|---|---|---|
| **Barrier Material** (unstressed) | **H**_{**2**}**O** 38°C, 90% RH (g/m2/ 24h) | **O**_{**2**} 23°C, 0% RH (cm3/m/ 24h/atm) | **EtO** (ppm) | | **ECH** (ppm) | |
| | | | **Material** | **Water** | **Material** | **Water** |
| Aluminium laminate I (PET 12µm/Al 9µm/ PE 40-50 µm) | < 0.5 ⁽¹⁾ | < 0.5 ⁽¹⁾ | > 100 ⁽⁴⁾ | < 1 ⁽⁴⁾ | < 0.1 ⁽⁴⁾ | < 0.1 ⁽⁴⁾ |
| Aluminium laminate II (PET 12µm/Al 9µm/ PP 60 µm) | < 0.1 ⁽¹⁾ | < 0.1 ⁽¹⁾ | > 100 ⁽⁴⁾ | < 1 ⁽⁴⁾ | < 0.1 ⁽⁴⁾ | < 0.1 ⁽⁴⁾ |
| Polypropylene (PP 500 µm) | <1.0⁽²⁾ | 150⁽²⁾ | ~80⁽⁴⁾ | ~30 ⁽⁴⁾ | ~8 ⁽⁴⁾ | < 1 ⁽⁴⁾ |
| Ethylene vinyl alcohol laminate (PE 20µm/EVOH 30µm/ PE 50 µm) | < 50 ⁽²⁾ | < 1.0 ⁽²⁾ | ~ 1 ⁽⁴⁾ | ~ 30 ⁽⁴⁾ | < 0.1 ⁽⁴⁾ | < 0.1 ⁽⁴⁾ |
| Polyvinylidene chloride (PVDC 160 µm) | < 1.0 ⁽²⁾ | < 0.1 ⁽²⁾ | < 0.1 ⁽⁴⁾ < 0.1 ⁽⁶⁾ | - 3 ⁽⁴⁾ < 0.1 ⁽⁶⁾ | > 100 ⁽⁴⁾ ~ 45 ⁽⁶⁾ | < 0.1 ⁽⁴⁾ < 0.1 ⁽⁶⁾ |
| Aluminium oxide laminate (PET 12µm/AlOx/ PE 50 µm) | 2-3 ⁽¹⁾ | 3.5 ⁽¹⁾ | > 100 ⁽⁴⁾ ~ 20 ⁽⁵⁾ | ~ 6 ⁽⁴⁾ ~ 8 ⁽⁵⁾ | ~ 12 ⁽⁴⁾ ~ 13 ⁽⁵⁾ | < 0.1 ⁽⁴⁾ < 0.1 ⁽⁵⁾ |
| Silicon oxide laminate (PET 12µm/ SiOx Techbarrier-T/ PP 60µm) | 0.3-0.5 ⁽³⁾ | 0.3 ⁽³⁾ | >100 ⁽⁴⁾ < 0.1 ⁽⁵⁾ | < 1 ⁽⁴⁾ <0.1 ⁽⁵⁾ | < 1 ⁽⁴⁾ < 0.1 ⁽⁵⁾ | < 0.1 ⁽⁴⁾ < 0.1 ⁽⁵⁾ |

| | | | | | | |
|---|---|---|---|---|---|---|
| (1) Danisco Flexible | | | | | | |
| (2) Paolini, Informacion Técnica | | | | | | |
| (3) Mitsubishi Chemical Corp. | | | | | | |
| (4) direct after sterilisation | | | | | | |
| (5) 5 days after sterilisation | | | | | | |
| (6) 21 days after sterilisation EtO = ethylene oxide ECH = 2-chloroethanol RH = relative humidity | | | | | | |

## Claims

1. Use of a laminate having an inner layer which contains a polyolefin, an outer layer which contains a polyester, a polyolefin or a polyamide and an intermediate layer which contains a silicon oxide in the manufacture of a barrier material to ethylene oxide gas.

2. Use according to claim 1, **characterised in that** the polyolefin is a polypropylene or a polyethylene.

3. Use according to claim 1 or 2, **characterised in that** the polyester for the outer layer of the laminate is polyethylene terephthalate.

4. Use according to claim 1 or 2, **characterised in that** the polyamide is nylon.

5. Use according to any one of claims 1 to 4, **characterised in that** the silicon oxide-containing intermediate layer is a layer of silicon oxide deposited in-between the facing surfaces of the inner and outer layers.

6. Use according to any one of claims 1 to 4, **characterised in that** the intermediate layer is a composite layer comprising the silicon oxide and a polymeric matrix or substrate therefor.

7. Use according to claim 6, **characterised in that** the matrix or substrate is of a polyester, a polyamide, a polypropylene or a polyvinyl alcohol.

8. Use according to claim 7, **characterised in that** the polyester for the matrix or substrate is polyethylene terephthalate.

9. Use according to claim 7, **characterised in that** the polyamide for the matrix or substrate is nylon.

10. Use according to claim 1, **characterised in that** the laminate has an inner layer of polypropylene, an outer layer of polyethylene terephthalate and an intermediate composite layer of a silicon oxide with polyethylene terephthalate or polyvinyl alcohol.

11. A container (6; 106) which has been exposed to ethylene oxide gas **characterised in that** the container is formed from a laminate having an inner layer which contains a polyolefin, an outer layer which contains a polyester, a polyolefin or a polyamide and an intermediate layer which contains a silicon oxide.

12. An assembly (10; 110) which has been exposed to ethylene oxide gas comprising an article (3; 103) sterilised by the ethylene oxide gas and a sealed container (6; 106) formed from a laminate having an inner layer which contains a polyolefin, an outer layer which contains a polyester, a polyolefin or a polyamide and an intermediate layer which contains a silicon oxide.

13. An assembly according to claim 12, **characterised in that** the assembly is a medical assembly with the article being a medical instrument (3; 103) for use in a medical procedure and the container containing an article or substance which is to be applied to the instrument as part of the medical procedure.

14. An assembly according to claim 13, **characterised in that** the medical instrument is a hydrophilic outer surface coated urethral catheter (3; 103) and the container is a wetting fluid container (6; 106) which contains a sterile wetting fluid for wetting of the hydrophilic coating of the catheter prior to use.

15. An assembly according to any one of claims 12 to 14, **characterised in that** the sealed container is an inner container and that the assembly further comprises an outer container (1; 101) having an inner volume accessed by the ethylene oxide gas and in which the inner container and article are disposed.

16. An assembly according to claim 15, **characterised in that** the assembly is a sealed storage package with the outer container being the packaging in which the article and inner container are kept until they are required to be used.

17. An assembly according to claim 15 when appendant to claim 14, **characterised in that** the outer container is a urine collection bag (1; 101).

18. An assembly according to any one of claims 12 to 15 or 17, **characterised in that** the assembly is contained in a storage package.

19. A storage package which contains a medical instrument (3; 103) having a hydrophilic outer surface coating and a sealed container (6; 106) which contains a sterile wetting fluid for wetting of the hydrophilic coating of the instrument and which is constructed from a laminate having an inner layer which contains a polyolefin, an outer layer which contains a polyester, a polyolefin or a polyamide and an intermediate layer which contains a silicon oxide.

20. A storage package according to claim 19, **characterised in that** the medical instrument is a urethral catheter for bladder drainage (3; 103).

21. A storage package according to claim 20, **characterised in that** the package further contains a urine collection bag (1; 101).

22. A process for forming a storage package containing a medical instrument (3; 103) having a hydrophilic outer surface coating and a wetting fluid container (6; 106) which contains a wetting fluid for wetting of the hydrophilic outer surface coating of the medical instrument comprising the steps of forming the wetting fluid container from a laminate having an inner layer which contains a polyolefin, an outer layer which contains a polyester, a polyolefin or a polyamide and an intermediate layer which contains a silicon oxide, subjecting the container to a steam or gamma radiation sterilising process to sterilise the wetting fluid in the container, assembling the medical instrument and sterilised wetting fluid container together into an assembly, subjecting the assembly to an ethylene oxide gas sterilising process to sterilise the medical instrument and enclosing the sterilised assembly in a storage package container.

## Patentansprüche

1. Verwendung eines Laminats mit einer Innenschicht, die ein Polyolefin enthält, einer äusseren Schicht, die einen Polyester, ein Polyolefin oder ein Polyamid enthält, und einer Zwischenschicht, welche ein Siliciumoxid enthält, zur Herstellung eines Sperrmaterials gegen Ethylenoxidgas.

2. Verwendung nach Anspruch 1, **dadurch gekennzeichnet, dass** das Polyolefin ein Polypropylen oder ein Polyethylen ist.

3. Verwendung nach Anspruch 1 oder 2, **dadurch gekennzeichnet, dass** der Polyester für die Aussenschicht des Laminats Polyethylenterephtalat ist.

4. Verwendung nach Anspruch 1 oder 2, **dadurch gekennzeichnet, dass** das Polyamid Nylon ist.

5. Verwendung nach einem der Ansprüche 1 bis 4, **dadurch gekennzeichnet, dass** die siliciumoxidhaltige Zwischenschicht eine Schicht aus Siliciumoxid ist, die zwischen die einander gegenüberliegenden Oberflächen der inneren und äusseren Schicht abgelagert ist.

6. Verwendung nach einem der Ansprüche 1 bis 4, **dadurch gekennzeichnet, dass** die Zwischenschicht eine Verbundschicht ist, die das Siliciumoxid und eine Polymermatrix oder ein Substrat für das Oxid enthält.

7. Verwendung nach Anspruch 6, **dadurch gekennzeichnet, dass** die Matrix oder das Substrat aus einem Polyester, einem Polyamid, einem Polypropylen oder einem Polyvinylalkohol besteht.

8. Verwendung nach Anspruch 7, **dadurch gekennzeichnet, dass** der Polyester für die genannte Matrix oder das Substrat Polyethylenterephtalat ist.

9. Verwendung nach Anspruch 7, **dadurch gekennzeichnet, dass** das Polyamid für die Matrix oder das Substrat Nylon ist.

10. Verwendung nach Anspruch 1, **dadurch gekennzeichnet, dass** das Laminat eine Innenschicht aus Polypropylen, eine Aussenschicht aus Polyethylenterephtalat und eine Zwischenschicht aus einem Verbundmaterial aus Siliciumoxid und Polyethylenterephtalat oder Polyvinylalkohol aufweist.

11. Behälter (6; 106), welcher der Einwirkung von Ethylenoxidgas ausgesetzt wurde, **dadurch gekennzeichnet, dass** der Behälter aus einem Laminat mit einer Innenschicht, die ein Polyolefin enthält, einer Aussenschicht, die einen Polyester, ein Polyolefin oder ein Polyamid enthält, und einer Zwischenschicht hergestellt ist, die ein Siliciumoxid enthält.

12. Garnitur (10; 110), welche der Einwirkung von Ethylenoxidgas ausgesetzt wurde, die einen Gegenstand (3; 103), der durch das Ethylenoxidgas sterilisiert wurde, sowie einen verschlossenen Behälter (6; 106) aus einem Laminat enthält, welches eine Innenschicht aufweist, die ein Polyolefin enthält, eine Aussenschicht, die einen Polyester, ein Polyolefin oder ein Polyamid enthält, und einer Zwischenschicht, die ein Siliciumoxid enthält.

13. Garnitur nach Anspruch 12, **dadurch gekennzeichnet, dass** sie eine medizinische Garnitur ist, wobei der Gegenstand ein medizinisches Instrument (3; 103) zur Verwendung in einem medizinischen Verfahren ist und der Behälter einen Gegenstand oder eine Substanz enthält, die als Teil des medizinischen Verfahrens auf das Instrument aufgebracht wird.

14. Garnitur nach Anspruch 13, **dadurch gekennzeichnet, dass** das medizinische Instrument ein Harnleiterkatheter (3; 103) ist, dessen äussere Oberfläche hydrophil beschichtet ist, und dass der Behälter ein Behälter (6; 106) für Benetzungsflüssigkeit ist, der eine sterile Benetzungsflüssigkeit zum Befeuchten der hydrophilen Beschichtung des Katheters vor seiner Verwendung enthält.

15. Garnitur nach einem der Ansprüche 12 bis 14, **dadurch gekennzeichnet, dass** der verschlossene Behälter ein innerer Behälter ist, und dass die Garnitur weiterhin einen äusseren Behälter (1; 101) mit einem inneren Volumen umfasst, das für gasförmiges Ethylenoxid zugänglich ist und in welchem sich der innere Behälter und der Gegenstand befinden.

16. Garnitur nach Anspruch 15, **dadurch gekennzeichnet, dass** die Garnitur eine verschlossene Lagerverpackung ist, wobei der äussere Behälter die Verpackung ist, in welcher sich der Gegenstand und der innere Behälter befinden, bis ihre Verwendung erforderlich wird.

17. Garnitur nach Anspruch 15 bei Abhängigkeit von Anspruch 14, **dadurch gekennzeichnet, dass** der Aussenbehälter ein Urinsammelbeutel (1; 101) ist.

18. Garnitur nach einem der Ansprüche 12 bis 15 oder 17, **dadurch gekennzeichnet, dass** sich die Garnitur in einer Lagerverpackung befindet.

19. Lagerverpackung, die ein medizinisches Instrument (3; 103) mit einer hydrophilen Beschichtung der äusseren Oberfläche und einen verschlossenen Behälter (6; 106) enthält, in dem sich eine sterile Benetzungsflüssigkeit zum Befeuchten der hydrophilen Beschichtung des Instruments befindet, und der aus einem Laminat hergestellt ist, welches eine innere Schicht aufweist, die ein Polyolefin enthält, eine äussere Schicht, die einen Polyester, ein Polyolefin oder ein Polyamid enthält, und eine Zwischenschicht, die ein Siliciumoxid enthält.

20. Lagerverpackung nach Anspruch 19, **dadurch gekennzeichnet, dass** das medizinische Instrument ein Harnleiterkatheter (3; 103) zur Entleerung der Blase ist.

21. Lagerverpackung nach Anspruch 20, **dadurch gekennzeichnet, dass** die Packung weiterhin einen Urinsammelbehälter (1; 101) aufweist.

22. Verfahren zur Herstellung einer Lagerverpackung, die ein medizinisches Instrument (3; 103) mit einer hydrophilen Beschichtung an der äusseren Oberfläche sowie einen Behälter für Benetzungsflüssigkeit (6; 106) enthält, in dem sich eine Benetzungsflüssigkeit zur Befeuchtung der äusseren hydrophilen Oberflächenbeschichtung des medizinischen Instrumentes befindet, wobei das Verfahren folgende Schritte umfasst: Herstellung des Behälters für Benetzungsflüssigkeit aus einem Laminat mit einer Innenschicht, die ein Polyolefin enthält, einer Aussenschicht, die einen Polyester, ein Polyolefin oder ein Polyamid enthält, und einer Zwischenschicht, die ein Siliciumoxid enthält; Anwendung eines Sterilisierungsverfahrens mittels Dampf oder Gammastrahlung auf den Behälter, um die Benetzungsflüssigkeit im Behälter zu sterilisieren; Einbringen des medizinischen Instruments und des sterilisierten Behälters für Benetzungsflüssigkeit in eine Garnitur; Anwendung eines Verfahrens zur Sterilisierung mittels Ethylenoxidgas auf die Garnitur, um das medizinische Instrument zu sterilisieren; und Einschluss der sterilisierten Garnitur in einen Behälter zur Lagerverpackung.

## Revendications

1. Utilisation d'un stratifié comprenant une couche intérieure contenant une polyoléfine, une couche extérieure contenant un polyester, une polyoléfine ou un polyamide, et une couche intermédiaire contenant un oxyde de silicium, dans la fabrication d'une matière de barrière à l'oxyde d'éthylène gazeux.

2. Utilisation selon la revendication 1, **caractérisée en ce que** la polyoléfine est un polypropylène ou un polyéthylène.

3. Utilisation selon la revendication 1 ou 2, **caractérisée en ce que** le polyester de la couche extérieure du stratifié est le téréphthalate de polyéthylène.

4. Utilisation selon la revendication 1 ou 2, **caractérisée en ce que** le polyamide est le nylon.

5. Utilisation selon l'une quelconque des revendications 1 à 4, **caractérisée en ce que** la couche intermédiaire contenant un oxyde de silicium est une couche d'oxyde de silicium déposée entre les surfaces des couches intérieure et extérieure faisant face l'une à l'autre.

6. Utilisation selon l'une quelconque des revendications 1 à 4, **caractérisée en ce que** la couche intermédiaire est une couche composite comprenant l'oxyde de silicium et une matrice polymère ou un substrat polymère de l'oxyde.

7. Utilisation selon la revendication 6, **caractérisée en ce que** la matrice ou le substrat comprend un polyester, un polyamide, un polypropylène ou un alcool de polyvinyle.

8. Utilisation selon la revendication 7, **caractérisée en ce que** le polyester de la matrice ou du substrat est le téréphthalate de polyéthylène.

9. Utilisation selon la revendication 7, **caractérisée en ce que** le polyamide de la matrice ou du substrat est le nylon.

10. Utilisation selon la revendication 1, **caractérisée en ce que** le stratifié comprend une couche intérieure en polypropylène, une couche extérieure en téréphthalate de polyéthylène, et une couche composite intérieure en un oxyde de silicium combiné avec du téréphthalate de polyéthylène ou de l'alcool de polyvinyle.

11. Récipient (6; 106) qui a été exposé à l'oxyde d'éthylène gazeux, **caractérisé en ce que** le récipient est réalisé à partir d'un stratifié comprenant une couche intérieure contenant une polyoléfine, une couche extérieure contenant un polyester, une polyoléfine ou un polyamide, et une couche intermédiaire contenant un oxyde de silicium.

12. Ensemble (10; 110) qui a été exposé à l'oxyde d'éthylène gazeux, comprenant un objet (3; 103) stérilisé par l'oxyde d'éthylène gazeux, et un récipient scellé (6; 106) réalisé à partir d'un stratifié comprenant une couche intérieure contenant une polyoléfine, une couche extérieure contenant un polyester, une polyoléfine ou un polyamide, et une couche intermédiaire contenant un oxyde de silicium.

13. Ensemble selon la revendication 12, **caractérisé en ce que** l'ensemble est un ensemble médical, l'objet étant un instrument médical (3; 103) pour une utilisation dans une procédure médicale, le récipient contenant un objet ou une substance qui doivent être appliqués à l'instrument en faisant partie de la procédure médicale.

14. Ensemble selon la revendication 13, **caractérisé en ce que** l'instrument médical est un cathéter urétral (3; 103) dont la surface externe présente un revêtement hydrophile, et que le récipient est un récipient de fluide humectant (6; 106) qui contient un fluide humectant stérile pour humidifier le revêtement hydrophile du cathéter avant son utilisation.

15. Ensemble selon l'une quelconque des revendications 12 à 14, **caractérisé en ce que** le récipient scellé est un récipient interne, et que l'ensemble comprend en plus un récipient externe (1; 101) présentant un volume interne accédé par l'oxyde d'éthylène gazeux et dans lequel le récipient interne est disposé.

16. Ensemble selon la revendication 15, **caractérisé en ce que** l'ensemble est un emballage de stockage scellé, le récipient externe constituant l'emballage dans lequel l'objet et le récipient interne sont retenus jusqu'à ce que leur utilisation est demandée.

17. Ensemble selon la revendication 15 lorsqu'elle dépend de la revendication 14, **caractérisé en ce que** le récipient externe est un sac collecteur d'urine (1; 101).

18. Ensemble selon l'une quelconque des revendications 12 à 15 ou 17, **caractérisé en ce que** l'ensemble est renfermé dans un emballage de stockage.

19. Emballage de stockage qui contient un instrument médical (3; 103) présentant un revêtement hydrophile d'une surface extérieure, et un récipient scellé (6; 106) qui contient un fluide humectant stérile pour humidifier la couche hydrophile de l'instrument, et qui est fabriqué à partir d'un stratifié comprenant une couche intérieure contenant une polyoléfine, une couche extérieure contenant un polyester, une polyoléfine ou un polyamide, et une couche intermédiaire contenant un oxyde de silicium.

20. Emballage de stockage selon la revendication 19, **caractérisé en ce que** l'instrument médical est un cathéter urétral (3; 103) pour vider la vessie.

21. Emballage de stockage selon la revendication 20, **caractérisé en ce que** l'emballage contient encore un sac collecteur d'urine (1; 101).

22. Procédé pour la fabrication d'un emballage de stockage contenant un instrument médical (3; 103) présentant un revêtement hydrophile de surface extérieure, et un récipient de fluide humectant (6; 106) qui contient un fluide humectant pour humidifier le revêtement hydrophile de surface extérieure de l'instrument médical, le procédé comprenant les étapes de fabriquer le récipient de fluide humectant à partir d'un stratifié comprenant une couche intérieure contenant une polyoléfine, une couche extérieure contenant un polyester, une polyoléfine ou un polyamide, et une couche intermédiaire contenant un oxyde de silicium; de soumettre le récipient à un procédé de stérilisation par la vapeur ou un rayonnement gamma afin de stériliser le fluide humectant dans le récipient; d'assembler l'instrument médical et le récipient de fluide humectant stérilisés pour former un ensemble; de soumettre l'ensemble à un procédé de stérilisation à l'oxyde d'éthylène gazeux afin de stériliser l'instrument médical; et de renfermer l'ensemble stérilisé dans un récipient d'emballage de stockage.
